# EUROPEAN PATENT APPLICATION

(11) **EP 4 686 300 A1**
(43) Date of publication of application: **28.01.2026**
(21) Application number: 25191855.3
(22) Date of filing: 25.07.2025
(51) Int. Cl.: H04W 72/54, H04W 24/02, H04W 88/08, H04W 84/12

(54) **METHOD AND ACCESS POINT FOR OPTIMISING WIFI CHANNELS**

(30) Priority: 26.07.2024 IT 202400017503
(71) Applicant: Sky Italia S.r.L., 20138 Milano (IT)
(72) Inventor: GALEONE, Guiseppe, 20138 Milano (IT)
(74) Representative: Hoffmann Eitle

(57) **Abstract**

Method for managing a channel for wireless communication of an access point with a device, the method comprising: a detecting step (S10) wherein, for a set of channels available for communicating with the device, a feature relative to the device transmission opportunity, TxOp, is detected indicating: a) remaining, by the average of the TxOp, below a first threshold; and at least one amongst the following features, each respectively indicating: b) a number of cases per unit of time where TxOp is below a second threshold and the TxOp average is above or equals the first threshold; c) a number of cases per unit of time where the channel background noise is above or equals a third threshold and the TxOp average is above or equals the first threshold; an evaluating step (S20) wherein a need for optimisation of the channel is evaluated based on at least one of the features detected in the detecting step.

## Description

### FIELD OF THE INVENTION

The present invention relates to a method, an access point and a system for optimising Wi-Fi channels.

### BACKGROUND OF THE INVENTION

In typical wireless communication, a station (also called client or simply device), such as, for example, a computer, a laptop or a smartphone, establishes a connection with an access point (AP). The AP can for example act as an intermediary between the station and the wired network or Internet, or it can establish a closed communication with one or more stations. During the communication process, the station and the access point exchange data via radio signals over specific frequencies, thus ensuring the transmission of information in an efficient and secure manner. Wireless communication offers flexibility and mobility and can enable users to access networks and services without the physical constraints of cables.

Examples of wireless communication are WiFi, WLAN, and the IEEE 802.11 protocol.

A problem that may arise during wireless communication of this type, for example, in a local WiFi network, is that the quality of the connection is not satisfactory to the user. This may depend on the fact that the user is enjoying or would like to enjoy content requiring a very high data transmission volume, as in the case, for example, of multimedia content, a video or streaming, and the channel set for the connection is not capable of ensuring the necessary bandwidth. Another possible problem is that the response (reaction) time of the internet site or application is not sufficiently short, i.e. that there is too great a delay. In some cases, the channel assigned by the AP is not ideal and can be optimised.

### SUMMARY OF THE INVENTION

One of the aims of the present invention is to monitor the wireless connection between the AP and the station (device) in order to determine whether it is necessary to optimise the assignment of the wireless communication channel.

Another aim of the present invention is to identify, among the available channels, a channel that best suits the user's needs. For example, the channel identified best satisfies certain criteria for assessing the quality of data transmission.

A further aim of the present invention is to assign to the communication between the AP and the station (device) a new communication channel determined in such a way as to improve the wireless communication and thus the user's experience during use.

More in general, a further aim of the present invention is to optimise the wireless communication channel between an AP and a device connected to it.

These and other aims are achieved by the present invention, comprising at least one of the following embodiments.

One or more of these aims are achieved by the independent claims. Advantageous embodiments are defined by the dependent claims. Further examples are provided in the present text also for explanatory purposes, as follows:
A1. Method for managing a channel for wireless communication of an access point with a device, the method comprising:
   a detecting step, wherein, for a set of channels available for communicating with the device, a feature relative to the device transmission opportunity, TxOp, is detected, indicating:
   a) remaining, by the average of the TxOp, below a first threshold; and at least one amongst the following features, each respectively indicating:
   b) a number of cases per unit of time where TxOp is below a second threshold and the TxOp average is above or equals the first threshold;
   c) a number of cases per unit of time where the channel background noise is above or equals a third threshold and the TxOp average is above or equals the first threshold;
   an evaluating step, wherein a need for optimisation of the channel is evaluated based on at least one of the features detected in the detecting step.
A2. Method according to aspect A1, wherein the evaluating step is performed also based on an activation of at least one specific process on the device.
A3. Method according to aspect A2, wherein the at least one specific process comprises one or more of: a reboot, speed test, diagnostic test, re-initialisation, request from the user to improve the communication quality.
A4. Method according to one of the preceding aspects, wherein if in the evaluating step an optimisation of the channel has been assessed as necessary, the channel will be changed.
A5. Method according to one of the previous aspects, the method further comprising an identification step wherein a specific channel amongst the available channels is identified, such that the specific channel has, based on a first number of measurements spaced by a first time interval, a TxOp average above or equal to the first threshold, the number of cases as per criterion b) below a fourth threshold, and/or the number of cases as per criterion c) below a fifth threshold.
A6. Method according to the previous aspect, wherein the first number of measurements is 6 and the first time interval is 5 seconds.
A7. Method according to one of aspects A5-A6, further comprising an optimisation step wherein, if in the evaluating step an optimisation of the channel has been considered necessary, the specific channel will be assigned to the device.
A8. Method according to the previous aspect, wherein the optimisation step further comprises disabling every previous channel optimisation measure.
A9. Method according to one of the preceding aspects, wherein the method is implemented by a router.
A10. Method according to one of the previous aspects, wherein the evaluating step is performed by a network device external to the AP, and the first threshold, the second threshold and the third threshold are calculated based on statistics comprising data from at least two devices.
A11. Method according to one of aspects Al-A9, wherein the first threshold is 50%, the second threshold is 20% and the third threshold is -80 dB.
A12. Method according to one of aspects Al-A9, wherein the first threshold is 50%, the second threshold is 50% and the third threshold is -80 dB.
A13. Method according to one of the previous aspects, wherein the number of cases as per item b) is 2 every 7 days and the number of cases as per item c) is 2 every 7 days.
A14. Access point for wireless communication with a device, the access point comprising:
   a detection unit configured to detect, for a set of channels available for communicating with the device, a feature relative to the transmission opportunity, TxOp, of the device, indicating:
      a) remaining, by the average of the TxOp, below a first threshold; and at least one amongst the following features, each respectively indicating:
      b) a number of cases per unit of time where TxOp is below a second threshold and the TxOp average is above or equals the first threshold;
      c) a number of cases per unit of time where the background noise is above or equals a third threshold and the TxOp average is above or equals the first threshold;
   an evaluating unit configured to evaluate a need for optimisation of the channel based on at least one of the features detected by the detection unit.
A15. Access point according to aspect A14, wherein the evaluating unit evaluates the need for optimisation also based on an activation of at least one specific process on the device.
A16. Access point according to aspect A15, wherein in the at least one specific process comprises one or more of: reboot, speed test, diagnostic test, re-initialisation, request from the user to improve the communication quality.
A17. Method according to one of aspects A14-A16, wherein if the evaluating unit has considered that an optimisation of the channel is necessary, the channel will be changed.
A18. Access point according to one of aspects A14-A17, further comprising an identification unit configured to identify a specific channel amongst the available channels, such that the specific channel has, based on a first number of measurements spaced by a first time interval, a TxOp average above or equal to the first threshold, the number of cases as per criterion b) below a fourth threshold and/or the number of cases as per criterion c) below a fifth threshold.
A19. Access point according to aspect A18, wherein the first number of measurements is 6 and the first time interval is 5 seconds.
A20. Access point according to one of aspects A18-A19, further comprising an optimisation unit configured to assign, if the evaluating unit has considered an optimisation of the channel to be necessary, the specific channel to the device.
A21. Access point according to aspect A18, wherein the optimisation unit is configured to disable every previous channel optimisation measure.
A22. Access point according to one of aspects A14-A21, wherein the access point is a router.
A23. Access point according to one of aspects A14-A22, wherein the evaluating unit is configured to evaluate a need for optimisation of the channel using an external network device, and the first threshold, the second threshold and the third threshold are calculated based on statistics comprising data from at least two devices.
A24. Access point according to one of aspects A14-A23, wherein the first threshold is 50%, the second threshold is 20% and the third threshold is -80 dB.
A25. Access point according to one of aspects A14-A23, wherein the first threshold is 50%, the second threshold is 50% and the third threshold is -80 dB.
A26. Access point according to one of aspects A14-A25, wherein the number of cases as per item b) is 2 every 7 days and the number of cases as per item c) is 2 every 7 days.
A27. System comprising an access point according to one of aspects A14-A26, and the device.
A28. Computer program comprising instructions for performing, when said program is run on a computer, all the steps according to any one of aspects A1-A13.

### LIST OF FIGURES

Figure 1 illustrates a flow diagram of a method for managing a channel for wireless communication of an access point with a device.
Figure 2 illustrates elements of a wireless communication network.
Figure 3 illustrates, without limitations, a diagram representing some components of an access point.
Figure 4 illustrates a block diagram of a computer adapted to run a program according to one embodiment.

### DETAILED DESCRIPTION

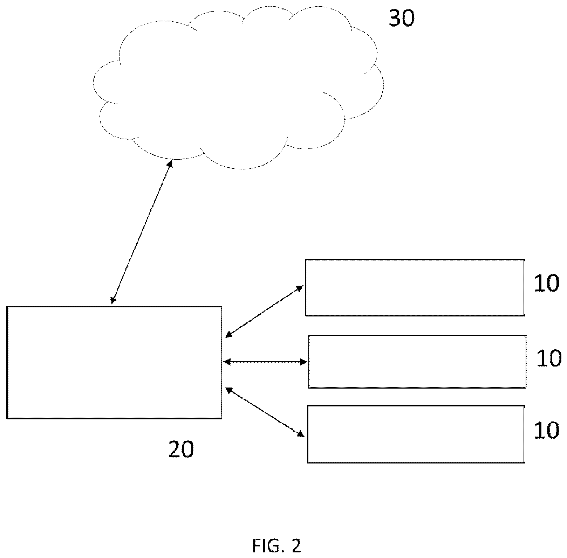

With reference to figure 2, a wireless communication network can consist of an access point 20 and at least one device 10 wirelessly connected with the access point 20. Other devices, such as, for example, the Cloud 30, can be connected to the network. Although figure 2 represents a Cloud 30 connected with the access point 20, the Cloud 30 can also be connected directly to one or more devices 10 of the network.

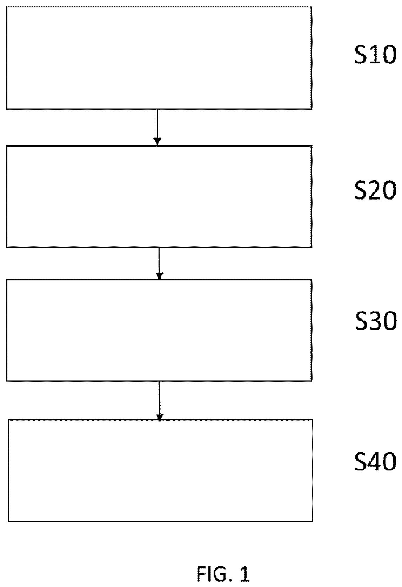

With reference to figure 1, a method for managing a channel for wireless communication of an access point 20 with one or more devices 10 which can be implemented by the device 10, the Cloud 30, a router 20, or a combination of these elements is described below. Moreover, one part of the processes can be carried out by one element of the network, whilst another part of the processes can be carried out by another element of the network.

Though reference will be made below to one communication channel between an access point 20 and one or more devices 10, this should not be understood as a limitation, and a communication over several channels is likewise possible and envisaged by the present invention. In the latter case, one or more of the communication channels between an access point 20 and one or more devices 10 will be monitored and optimised.

The word "management" means at least one amongst monitoring the communication quality, evaluating the need to change the channel and intervening in the assignment of the communication channel or channels.

Examples of channels available in the WiFi band for wireless communication are, for the 2.4Ghz frequency, the channels 1, 6, 11 and 13, all at 20Mhz (as the bandwidth), and, for the 5Ghz frequency, the channels 36 to 80Mhz, 44 to 40Mhz, 36 to 40Mhz, 36 to 20Mhz, 44 to 20Mhz and 48 to 20Mhz.

With reference to figure 1, the method comprises a detecting step S10, wherein, for a set of channels available for communicating with the device 10, the device 10 transmission opportunity is detected (measured). The transmission opportunity represents a limited time interval in which at a station (client, device 10) it is permitted to transfer a series of frames towards an AP via a specific channel. In one example, this is the Transmission Opportunity TxOp known in the context of WiFi IEEE 802.11. In IEEE 802.11, TxOp is expressed in milliseconds and can have a maximum value of 65535. The transmission opportunity rate can be considered as the complementary rate of interference. In fact, if in an arbitrary unit of time the station has exclusive access to a channel per x% of the time, it means that for (100-x)% of this same time (x varies between 0 and 100) it does not have exclusive access and is thus in a condition of (real or potential) interference with other devices 10 on the same channel. The arbitrary unit of time could be a time sufficient to enjoy the time window given by TxOp, e.g. 70 seconds, but it could also be one or more minutes, one or more hours, one day or several days. The arbitrary unit of time can be a predetermined unit of time, or it can be determined based on the data available to the AP 20 and/or to the Cloud 30, for example based on statistical data calculated for devices 10 other than the one for which the method described herein is being applied.

In the detecting step S10 for detecting the transmission opportunity, the method in particular detects the remaining, by the average of the TxOp (average value), below a first threshold (i.e. having a value lower than that of the first threshold). In other words, in step S10, the method verifies whether the TxOp average, calculated over an arbitrary unit of time, remains lower than a first threshold. The first threshold can be a predetermined value, e.g. 40%, 45%, 60%, or more preferably 50%. Such remaining, by the TxOp average, below the first threshold represents a detected feature (or a parameter, index indicating that the first threshold has not been exceeded).

The detecting step S10 can be limited to detecting the fact that the average of the transmission opportunity is not above the first threshold (feature a)), or it can also comprise detecting at least one amongst the following features (or parameters, indexes indicating such features/parameters) b) and c):
b) a number of cases per unit of time where TxOp is below a second threshold and the TxOp average is above or equals the first threshold;
c) a number of cases per unit of time where the background noise is above or equals a third threshold and the TxOp average is above or equals the first threshold;
Feature b) is established for a predetermined arbitrary unit of time or is calculated based on data available to the AP 20 or to the Cloud 30, for example based on statistical calculated for devices 10 other than the one for which the method described herein is being applied. According to feature b), it is verified whether in this unit of time TxOp is below a second threshold even though the average thereof, calculated with feature a), is above or equals the first threshold. Feature b) aims to determine whether, notwithstanding that the transmission opportunity is good on average, there are frequent occasions where it is below an acceptable level (the second threshold). "Acceptable" means a level such as to ensure that the user can enjoy the service he or she wants in a continuous manner without significant interruptions. The "acceptable" level can thus be connected to a respective threshold. Examples of this service are: viewing of content in a streaming mode, video games, listening to radio and television broadcasts, connecting to the internet, including website navigation online, checking weather forecasts, checking news and bulletins, using booking, payment, home banking services, etc.

The second threshold can be a predetermined value, e.g. 30%,40%, 45% or more preferably 50%.

The number of cases per unit of time as per feature b) can be, for example, 1 every day, 1 every 2, 3 or 4 days, 2 every 1, 2, 3 or 4 days, or more preferably 2 or 3 every 7 days.

Feature c) is established for a predetermined arbitrary unit of time or is calculated based on data available to the AP 20 or to the Cloud 30, for example based on statistical data calculated for devices 10 other than the one for which the method described herein is being applied. According to feature c), it is verified whether in this unit of time the channel background noise is above or equals a third threshold even though the TxOp average is above or equals the first threshold.

The background noise of a channel can be measured in different ways and is a known measurement in the context of wireless transmission and WiFi transmission in particular. The background noise is expressed in decibels (dB). A channel can be considered noisy when its background noise, also called noise floor, is for example above -80 dB.

Feature c) aims to determine whether, notwithstanding that the transmission opportunity is good on average, there are frequent occasions where the channel background noise is above or equals an acceptable level (the third threshold), i.e. such as to ensure that the user can enjoy the service he or she wants in a continuous manner without significant interruptions.

The third threshold can be a predetermined value, e.g. -70dB, -75dB, -85dB, - 90dB, or more preferably -80dB.

The number of cases per unit of time as per feature c) can be for example 1 every day, 1 every 2, 3 or 4 days, 2 every 1, 2, 3 or 4 days, or more preferably 2 or 3 every 7 days.

The method comprises an evaluating step S20 wherein a need to optimise the wireless communication channel is evaluated based on at least one of the features detected in the detecting step S10. For example, the evaluation can be based on feature a) alone, on features a) and b), on features a) and c), or on features a), b) and c). The evaluation S20 can be based also or only on further information as described below.

Thanks to the method comprising steps S10 and S20, it is possible to monitor the quality of communication of the wireless channel between the access point 20 and the device 10, and obtain an efficient evaluation of the need to update the communication channel, that is, it is possible to evaluate whether the communication quality of the device 10 is adequate for its ideal operation, i.e. it is possible to evaluate whether the assigned channel is appropriate for use of the device 10 by the user. For example, a channel may be suitable for checking a webpage containing news but not be suitable for streaming a film. Or a channel may be suitable for booking a table at a restaurant online but not be suitable for a secure encrypted transaction for the purchase of securities.

In the above-described method, the evaluating step S20 can optionally be performed also based on an activation of at least one specific process on the device 10. In other words, the evaluating step S20 can take account not only of feature a) described above (or a)+b), or a)+c), or a)+b)+c) ), but also of further information. This further information refers to the activation of processes on the device 10. "Activation" is understood also to mean "execution", "launching" or "processing".

An example of a process activated on the device 10 is a reboot. The device 10 could be programmed to restart in the event of communication problems or dysfunctions, or reboot based on a user command. This reboot is information is useful for supplementing feature a) (or features a)+b), or a)+c), or a)+b)+c) ) in the evaluating step S20.

A further example of a process activated on the device 10 is the carrying out of a transmission speed test. If the device 10 carries out a transmission speed test, it is probable that the currently configured channel is not satisfactory in terms of performance, and the device carries out the test (automatically or based on a user command) to check its actual performance.

A further example of a process activated on the device 10 is a diagnostic test carried out automatically or based on a user command. In this case as well, the carrying out of a diagnostic test indicates that the currently configured channel is not satisfactory in terms of performance.

A further example of a process activated on the device 10 is a re-initialisation of the device 10 carried out automatically or based on a user command.

A further example of a process activated on the device 10 is a request from the user to improve the communication quality, for example submitted by the user by telephone or online.

The carrying out of a re-initialisation or a request from the user to improve the communication quality indicates that the currently configured channel is not satisfactory in terms of performance.

For example, the evaluating step could assign a given starting score to the channel used by the device 10. This score could be increased by a predetermined value in relation to feature a). The score could be increased by a predetermined value in relation to feature b). The score could be increased by a predetermined value in relation to feature c). Finally, the score could be further increased in relation to the activation of at least one specific process amongst: a reboot, speed test, diagnostic test, re-initialisation, and a request from the user to improve the communication quality. If the total score is above a predetermined value, the evaluating step S20 will conclude with the assessment that an optimisation of the channel is necessary and if the total score is below or equals the predetermined value, the evaluating step S20 will conclude with the assessment that an optimisation of the channel is not necessary.

The evaluating step S20 can also optionally be based on the activation of at least one specific process on the device 10, without being based on feature a) alone or in combination with b) and/or c). In other words, an evaluating step S20 based solely on the activation of at least one specific process on the device 10 is likewise possible.

Thanks to the consideration of a specific process carried out on the device 10 in the evaluating step S20, it is possible to more accurately identify the correct functioning of the channel assigned to the device, and obtain more specific information (as compared to the sole features a), b) and/or c)) regarding the actual performance of the assigned channel and the correspondence between the assigned channel and the performance actually requested of the channel.

The method can further optionally comprise the replacement of the current communication channel if the evaluating step S20 has concluded with an assessment that an optimisation of the channel is necessary. This allows the communication to be continued on a different channel and prevents the device from continuing the communication using a channel that has been judged inadequate.

The method can further optionally comprise an identification step S30, wherein a specific channel amongst the available channels is identified, so that the specific channel has, based on a first number of measurements spaced by a first time interval, a TxOp average above or equal to the first threshold, the number of cases as per criterion b) below a fourth threshold and/or the number of cases as per criterion c) below a fifth threshold.

In order to identify a specific channel for the purpose of replacing the current communication channel of the device 10, it is useful to ascertain the availability of a channel that may ensure higher quality communication. This identification requires that the average of the transmission opportunity is above or equals the first threshold, the number of cases as per criterion b) is below a fourth threshold and/or the number of cases as per criterion c) is below a fifth threshold. This is established based on a certain number of measurements of the average of the transmission opportunity, the number of cases as per criterion b) and and/or the number of cases as per criterion c). The number of measurements, also called "first number of measurements", may be several units, e.g. 4, 5, 10, 15, or preferably 6 measurements. These measurements are spaced over time (set apart) by a time interval, also called "first time interval", which may be several seconds, e.g. 3, 4, 6, 10 or 12 seconds, or preferably 5 seconds.

The average of the transmission opportunity of each of the various available channels evaluated in the identification step S30 does not depend on a single device but is rather an intrinsic property of the channel.

The fourth threshold corresponds to the second threshold, but it serves to identify the specific channel and may be different from (more restrictive than) the threshold (second threshold) of the evaluating step S20. The fourth threshold is preferably 10%, even more preferably 5%, even more preferably 1%, even more preferably 0%.

The fifth threshold corresponds to the third threshold, but it serves to identify the specific channel and may be different from (more restrictive than) the threshold (third threshold) of the evaluating step S20. The fifth threshold is preferably 10%, even more preferably 5%, even more preferably 1%, even more preferably 0%.

Thanks to the identification step S30, it is possible to determine a channel with more suitable features (performance) than the channel currently in use at the device 10 (in generale better performance from the standpoint of communication quality). The identification step S30 makes it possible to determine an optimal channel to replace the channel in use at the device 10.

The method can further optionally comprise an optimisation step S40, wherein, if an optimisation of the channel has been considered necessary in the evaluating step S20, the specific channel determined in the identification step S30 will be assigned to the device 10. This makes it possible to improve the performance of the channel with which the device 10 communicates, and/or to overcome deficiencies of the previous channel from the standpoint of the TxOp average, background noise (noise floor) and/or negative peaks of TxOp. This also makes it possible to respond to the user's needs in an optimal manner and best manage the user's requests to improve the service.

The optimisation step S40 can further comprise a disabling of every previous channel optimisation measure. This enables a new and more up-to-date evaluation of the communication features.

The evaluating step S20 can optionally be performed by an AP 20 connected to more than one device 10, or by a network device external to the AP connected to more than one device 10. The network device can be for example the Cloud 30.

In these cases, the evaluating step S20 can be performed without considering the first threshold, the second threshold and the third threshold as predetermined values. In particular, thanks to the connection with more than one device 10, the first threshold, the second threshold and the third threshold can be obtained dynamically based on statistics relating to at least two devices 10. These statistics can comprise various functions, such as arithmetic average, weighted average, standard deviation, maximum, minimum, interpolation, regression, etc. The values of the first threshold, second threshold and third threshold thus obtained may also vary over time based on the variations over time of the features of the at least two devices 10.

This enables the evaluation to be adapted to the dynamic behaviour of the local network, making the evaluating step more accurate.

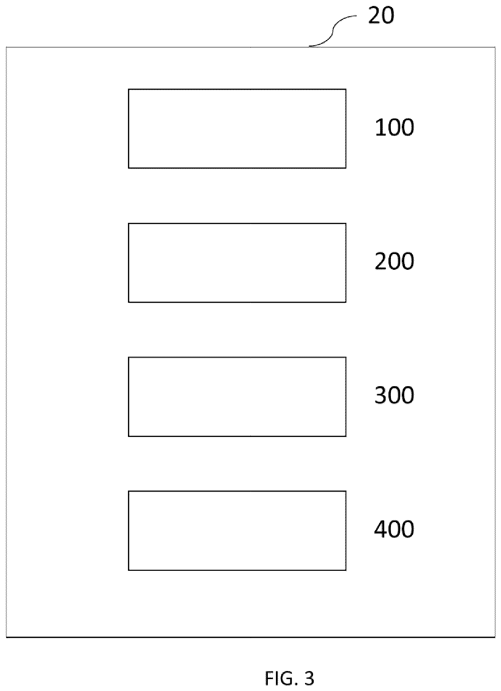

The above-described method can optionally be implemented, for example, by an access point (AP) 20. The AP can be, for example, a router 20. Figure 3 shows a diagram which represents some components of the AP 20; it is noted that not all these components need be present and that they are represented for the sake of completeness.

The AP that implements the method comprises a detection unit 100 configured to detect, for a set of channels available for communicating with the device 10, the remaining, by the average of the TxOp, below a first threshold as described above.

The detection unit 100 can further be configured to detect at least one amongst the features b) and c) described above.

The AP further comprises an evaluating unit 200 configured to evaluate whether there is a need for optimisation of the channel based on at least one of the features detected by the detection unit 100.

The evaluating unit 200 can optionally evaluate the need for optimisation also based on the activation of at least one specific process on the device 10. The at least one specific process can comprise one or more amongst: a reboot, speed test, diagnostic test, re-initialisation, request from the user to improve the communication quality.

If the evaluating unit 200 has assessed that an optimisation of the channel is necessary, the channel can be changed, i.e. replaced, with another channel.

The access point 20 can optionally further comprise an identification unit 300 configured to identify a specific channel amongst the available channels, such that the specific channel has, based on a first number of measurements spaced by a first time interval, a TxOp average above or equal to the first threshold, the number of cases as per criterion b) below a fourth threshold and/or the number of cases as per criterion c) below a fifth threshold.

The number of measurements, also called "first number of measurements", may be several units, e.g. 4, 5, 10, 15, or preferably 6 measurements. These measurements are spaced over time (set apart) by a time interval, also called "first time interval", which may be several seconds, e.g. 3, 4, 6, 10 or 12 seconds, or preferably 5 seconds.

The access point 20 can optionally further comprise an optimisation unit 400 configured to assign, if the evaluating unit 200 has considered an optimisation of the channel necessary, the specific channel to the device 10.

The optimisation unit 400 can optionally be configured to disable every previous channel optimisation measure.

The evaluating unit 200 can be optionally configured to carry out the evaluation based on information relating to several devices 10 connected to the AP, or also using a network device external to the AP 20 connected to more than one device 10. The network device can for example be the Cloud 30.

In these cases, the evaluating unit 200 can optionally perform the evaluation without considering the first threshold, second threshold and third threshold as predetermined values. In particular, thanks to the connection with more than one device 10, the first threshold, the second threshold and the third threshold can be dynamically obtained based on statistics relating to at least two devices 10. These statistics can comprise various functions, such as arithmetic average, weighted average, standard deviation, maximum, minimum, interpolation, regression, etc. The values of the first threshold, the second threshold and the third threshold thus obtained may also vary over time based on the variations over time of the features of the at least two devices 10.

Figure 2 represents a system comprising an access point 20 (for example a router), and the device 10. The system can optionally comprise more than one device 10. The system can optionally comprise other network devices such as, for example, the Cloud 30.

The present invention also relates to and comprises a computer program which, when said program is run on one or more processors or computers (i.e. comprises an access point 20, one or more devices 10 and/or the Cloud 30), performs steps S10 and S20, and optionally steps S30 and S40. Step S30 can optionally be performed independently of step S40. In general, the computer program comprises instructions suitable for performing any combination of the steps described with reference to the method (including the optional aspects) or for making the computer function as a device or access point as described herein. It is further noted that the computer, like any device described herein, is to be understood as any hardware and/or software combination, implemented by means of one or more units concentrated in one apparatus or distributed over several interconnected apparatus.

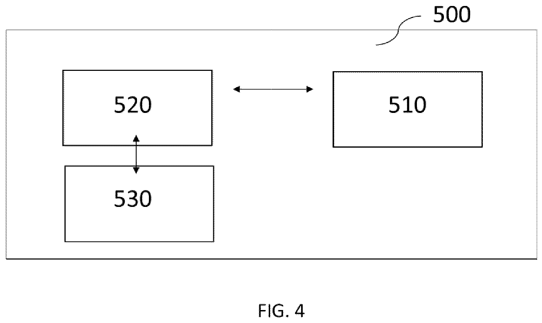

Figure 4 illustrates a block diagram exemplifying a computer 500 capable of running the aforesaid computer program. In particular, the computer 500 comprises a memory 530 for storing the program instructions and/or the data necessary for running the program, a processor 520 for carrying out the instructions and an input/output interface 510. In particular, figure 4 is illustrative and not limiting, since in fact the computer 500 can be set up either so as to be concentrated in a single device, or so as to be distributed over several interconnected devices. Therefore, the program can be run locally on a concentrated (local) device or distributed.

In general, what was previously illustrated for the method described above is also valid for the access point, the computer program, etc., and vice versa, barring indications to the contrary.

The above-described entities, as well as the components thereof (e.g. the units), can be implemented in a single device, via hardware, software, or a combination of the latter, or across multiple interconnected units or devices (likewise hardware, software, or a combination thereof). In other words, each or some of the above-described units can be implemented locally or in a distributed manner.

Naturally, the description set forth hereinabove of embodiments and examples applying the principles recognised by the inventors is given solely by way of illustration of such principles and should thus not be construed as limiting the scope of the invention claimed herein.

## Claims

1. Method for managing a channel for wireless communication of an access point (20) with a device (10), the method comprising:
a detecting step (S10), wherein, for a set of channels available for communicating with the device (10), a feature relative to the device (10) transmission opportunity, TxOp, is detected indicating:
a) remaining, by the average of the TxOp, below a first threshold;
and at least one amongst the following features, each respectively indicating:
b) a number of cases per unit of time where TxOp is below a second threshold and the TxOp average is above or equals the first threshold;
c) a number of cases per unit of time where the channel background noise is above or equals a third threshold and the TxOp average is above or equals the first threshold;
an evaluating step (S20), wherein a need for optimisation of the channel is evaluated based on at least one of the features detected in the detecting step (S10).

2. Method according to claim 1, wherein the evaluating step (S20) is performed also based on an activation of at least one specific process on the device (10).

3. Method according to claim 2, wherein the at least one specific process comprises one or more of: reboot, speed test, diagnostic test, re-initialisation, request from the user to improve the communication quality.

4. Method according to one of the previous claims, the method further comprising an identification step (S30) wherein a specific channel amongst the available channels is identified, such that the specific channel has, based on a first number of measurements spaced by a first time interval, a TxOp average above or equal to the first threshold, the number of cases as per criterion b) below a fourth threshold, and/or the number of cases as per criterion c) below a fifth threshold.

5. Method according to one of the previous claims, wherein the evaluating step (S20) is performed by a network device external to the access point (20), and the first threshold, the second threshold and the third threshold are calculated based on statistics comprising data from at least two devices (10).

6. Access point (20) for wireless communication with a device (10), the access point (20) comprising:
a detection unit (100) configured to detect, for a set of channels available for communicating with the device (10), a feature relative to the transmission opportunity, TxOp, of the device (10), indicating:
a) remaining, by the average of the TxOp, below a first threshold;
and at least one amongst the following features, each respectively indicating:
b) a number of cases per unit of time where TxOp is below a second threshold and the TxOp average is above or equals the first threshold;
c) a number of cases per unit of time where the channel background noise is above or equals a third threshold and the TxOp average is above or equals the first threshold;
an evaluating unit (200) configured to evaluate a need for optimisation of the channel based on at least one of the features detected by the detection unit (100).

7. Access point (20) according to claim 6, wherein the evaluating unit (200) is configured to evaluate the need for optimisation also based on an activation of at least one specific process on the device (10).

8. Access point (20) according to claim 7, wherein the at least one specific process comprises one or more of: reboot, speed test, diagnostic test, re-initialisation, request from the user to improve the communication quality.

9. Access point (20) according to any of claims 6-8, further comprising an identification unit (300) configured to identify a specific channel amongst the available channels, such that the specific channel has, based on a first number of measurements spaced by a first time interval, a TxOp average above or equal to the first threshold, the number of cases as per criterion b) below a fourth threshold, and/or the number of cases as per criterion c) below a fifth threshold.

10. Access point (20) according to any of claims 6-9, wherein the evaluating unit (200) is configured to evaluate a need for optimisation of the channel using an external network device, and the first threshold, the second threshold and the third threshold are calculated based on statistics comprising data from at least two devices (10).
